Europäisches Patentamt

European Patent Office

Office européen des brevets

(11) Veröffentlichungsnummer: **0 362 724**
**A2**

(12) **EUROPÄISCHE PATENTANMELDUNG**

(21) Anmeldenummer: 89118135.6

(22) Anmeldetag: 30.09.89

(51) Int. Cl.5: **C08L 69/00 , C08L 51/04 , C08L 33/10**

(30) Priorität: 07.10.88 DE 3834129
18.11.88 DE 3839060

(43) Veröffentlichungstag der Anmeldung:
11.04.90 Patentblatt 90/15

(84) Benannte Vertragsstaaten:
BE DE ES FR GB IT NL

(71) Anmelder: BASF Aktiengesellschaft
Carl-Bosch-Strasse 38
D-6700 Ludwigshafen(DE)

(72) Erfinder: Neumann, Rainer, Dr.
Mozartstrasse 2 b
D-6704 Mutterstadt(DE)
Erfinder: Vietmeier, Jürgen, Dr.
Waldstrasse 112
D-6706 Wachenheim(DE)
Erfinder: Baumgartner, Ehrenfried, Dr.
Goethestrasse 1
D-6701 Roedersheim-Gronau(DE)

(54) **Thermoplastische Formmasse.**

(57) Thermoplastische Formmasse, enthaltend, bezogen auf die Komponenten A, B und C,
A: 10 bis 85 Gew.% mindestens eines Polycarbonats A
B: 10 bis 50 Gew.% eines Pfropfmischpolymerisats B aus, jeweils bezogen auf B
$b_1$: 20 bis 80 Gew.% mindestens eines Kautschuks $b_2$ mit einer Glastemperatur von unter 0° C und
$b_2$: 80 bis 20 Gew.% einer darauf gepfropften Hülle $b_2$ aus, jeweils bezogen auf $b_2$
$b_{21}$: 70 bis 95 Gew.% Methylmethacrylat $b_{21}$ und
$b_{22}$: 5 bis 25 Gew.% eines N-substituierten (Meth)acrylamids $b_{22}$ der allgemeinen Formel I
$CH_2 = CR\text{-}CONHX$, (I),
in der R Wasserstoff oder ein Methylrest ist und X ein Cyclohexyl-, Methylcyclohexyl-, Benzyl- oder Phenylrest ist, und
C: 5 bis 50 Gew.% eines thermoplastischen Polymerisats oder Copolymerisats C eines $C_1$-$C_4$-Alkylesters der Methacrylsäure.

EP 0 362 724 A2

## Thermoplastische Formmasse

Stand der Technik

DE-PS 1 170 141 (1)
DE-PS 1 810 993 (2)
DE-PS 22 59 564 (3)
DE-OS 20 37 419 (4)
EP-A- 244 856 (5)
EP-A- 173 146 (6)
EP-A- 174 503 (7)
EP-A- 135 492 (8)
DE-OS 32 10 284 (9)
DE-OS 36 32 496 (10)

Die Schlagzähmodifizierung von Polycarbonaten mit ABS-Kautschuken ist bekannt und in (1) und (2) beschrieben. Diese Formmassen besitzen im allgemeinen zufriedenstellende Eigenschaften. Häufig wird allerdings eine höhere Wärmeformbeständigkeit, Zähigkeit und verbesserte Witterungsbeständigkeit angestrebt. In (3), (4) und (5) werden deshalb zur Verbesserung der Beständigkeit gegen Licht und Wärme, Formmassen beschrieben, die aus Polycarbonaten und ASA-Polymerisaten aufgebaut sind. Es zeigt sich jedoch, daß solche acrylnitrilhaltigen Polymermischungen bei der Verarbeitung leicht verfärben. In (6) wird vorgeschlagen, Polycarbonate mit Styrol-N-Phenylmaleinimid-Copolymeren und mit Methylmethacrylat gepfropften Kautschuken zu verwenden. Allerdings weisen diese Formmassen geringe MFI-Werte auf, was bei der Herstellung größerer Formteile im Spritzguß höhere Verarbeitungstemperaturen erfordert, was wiederum aufgrund des N-Phenylmaleinimidgehalts zu deutlicher Gelbfärbung der Formteile führt. Auch die in (7) beschriebenen acrylnitrilfreien Mischungen aus Polycarbonaten, mit MMA gepfropften Kautschuken und Styrol-Maleinsäureanyhdrid-MMA-Terpolymeren bzw. die nach der Lehre von (8) erhaltenen PC-Mischungen mit Styrol-Maleinsäureanhydrid-MMA-Terpolymeren und ABS-Kautschuken weisen die geschilderten Nachteile auf.

Die in (9) beschriebenen Mischungen aus PMMA, Polycarbonaten und mit MMA-gepfropften Kautschuken zeigen kaum Gelbfärbung beim Spritzguß und weisen eine gute Konstanz der Kerbschlagzähigkeit bei Wärmelagerung auf. Nachteilig ist die geringe Durchstoßarbeit im Fallbolzentest, die hauptsächlich bei tieferen Temperaturen beobachtet wird.

In (10) werden einphasige kautschukfreie Polymermischungen aus Polycarbonaten und Copolymerisaten von MMA mit speziellen N-substituierten Methacrylamiden beschrieben. Solche Mischungen sind transparent und sind vergilbungsbeständig. Allerdings ist die Schlagzähigkeit solcher Formmassen extrem von der Verarbeitungstemperatur abhängig, wobei hauptsächlich bei tiefen Prüftemperaturen ein steiler Abfall der Zähigkeit zu verzeichnen ist, was Formteile aus solchen Mischungen für die Außenanwendung unbrauchbar macht.

Es bestand daher die Aufgabe, Mischungen auf Basis von Pfropfkautschuken und Polycarbonaten zu entwickeln, die die geschilderten Nachteile nicht aufweisen. Insbesondere sollte ein gutes Fließverhalten und eine hohe Vergilbungsbeständigkeit, bei geringer Verarbeitungstemperaturempfindlichkeit der Zähigkeit gewährleistet sein. Außerdem sollten solche Mischungen hohe Werte für die Durchstoßarbeit im Fallbolzentest aufweisen.

Überraschend wurde dabei gefunden, daß Pfropfkautschuke mit MMA und speziellen N-substituierten Methacrylamiden in Kombination mit Polymeren der $C_1$- bis $C_4$-Ester der Methacrylsäure zu den gewünschten verbesserten Eigenschaftskombinationen führen.

Die Erfindung betrifft daher eine thermoplastische Formmasse, die enthält, bezogen auf die Komponenten A und B und C

A: 10 bis 85 Gew.% mindestens eines Polycarbonats A,

B: 10 bis 50 Gew.% eines Pfropfmischpolymerisats B aus, jeweils bezogen auf B

$b_1$: 20 bis 80 Gew.% mindestens eines Kautschuks ($b_1$) mit einer Glastemperatur von unter 0°C und

$b_2$: 80 bis 20 Gew.% einer darauf gepfropften Hülle ($b_2$) aus, jeweils bezogen auf $b_2$

$b_{21}$: 70 bis 95 Gew.% Methylmethacrylat ($b_{21}$) und

$b_{22}$: 5 bis 25 Gew.% eines N-substituierten (Meth)acrylamids ($b_{22}$) der allgemeinen Formel I

$CH_2 = CR-CONHX$     (1)

in der R Wasserstoff oder ein Methylrest ist und X ein Cyclohexyl-, Methylcyclohexyl-, Benzyl- oder Phenylrest ist und

C: 5 bis 50 Gew.% eines thermoplastischen Homo- oder Copolymerisats C eines $C_1$-$C_4$-Alkylesters der Methacrylsäure.

Bevorzugt sind solche Formmassen, die enthalten, bezogen auf die Komponenten A, B und C,

A: 30 bis 80 Gew.% mindestens eines Polycarbonats A,

B: 15 bis 40 Gew.% eines Pfropfmischpolymerisats B aus, jeweils bezogen auf B,

$b_1$: 30 bis 70 Gew.% Kautschuk $b_1$ mit einer Glastemperatur von unter -20°C,

$b_2$: 70 bis 30 Gew.% Hülle $b_2$

C: 5 bis 40 Gew.% thermoplastisches Polymerisat C.

Komponente A (Polycarbonat)

Als Polycarbonate (Komponente A) können die bekannten Polycarbonate verwendet werden. Unter Polycarbonaten A im Sinne der erfindungsgemäßen Formmasse sollten Polycarbonate auf der Basis von Homopolycarbonaten und Copolycarbonaten von Bisphenolen verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physics of Polycarbonates, Interscience Publishers, New York, 1964, in der US-PS 299 835 und in der DE-A 22 48 817 beschrieben sind. Besonders bevorzugt sind Polycarbonate auf der Basis von Bisphenol A, nämlich 2, 2-Bis-(4-hydroxyphenyl)propan. Die Synthese der Polycarbonate wird beispielsweise in der US-PS 2 999 835 und der GB-PS 772 627 beschrieben.

Die Komponente A weist im allgemeinen ein mittleres Molekulargewicht $\overline{M}_w$ im Bereich von 25.000 bis 200.000, bestimmt durch Lichtstreuung, auf.

Die Formmasse besteht zu 10 bis 85 Gew.% bevorzugt zu 30 bis 80 Gew.% aus der Komponente A.

Komponente B (Pfropfmischpolymerisat)

Die erfindungsgemäße Komponente B ist ein Pfropfmischpolymerisat und ist in den Formmassen zu 10 bis 50 Gew.% bevorzugt zu 15 bis 40 Gew.% enthalten.

Diese Propfmischpolymerisate B weisen eine Pfropfhülle $b_2$ auf, die 80 bis 20 Gew.%, bevorzugt 70 bis 30 Gew.%, bezogen auf B, ausmacht. Die Pfropfhülle $b_2$ besteht zu 70 bis 95 Gew.% aus Einheiten von Methylmethacrylat ($b_{21}$) und zu 5 bis 30 Gew.% aus Einheiten des substituierten (Meth)acrylamids ($b_{22}$) der allgemeinen Formel I

$$H_2C = CR\text{-}CO\text{-}NHX \qquad (I)$$

in der R Wasserstoff oder Methyl und X einen Cyclohexyl-, Methylcyclohexyl-, Benzyl- oder Phenylrest bedeutet. Die Pfropfhülle stellt somit ein Copolymeres aus MMA-N-Cyclohexyl(meth)acrylamid, MMA-N-2-Methylcyclohexyl(meth)acrylamid, MMA-N-phenyl(meth)acrylamid oder MMA-N-Benzyl(meth)acrylamid dar. Auch Mischungen dieser speziellen N-substituierten Alkyl(meth)acrylamide der allgemeinen Formel I in Kombination mit MMA können als Pfropfmonomere verwendet werden.

Die genannten Monomeren der Pfropfhülle werden auf eine Pfropfgrundlage $b_1$ gepfropft, die 20 bis 80 Gew.%, bevorzugt 30 bis 70 Gew.% bezogen auf B, ausmacht. Die Pfropfgrundlage besteht aus einem Kautschuk mit einer Glastemperatur [nach K.H. Illers und H. Breuer, Kolloid-Zeitschrift 167, (1961), Seite 110] von unter 0°C, bevorzugt unter -20°C.

Die Herstellung eines solchen Pfropfmischpolymerisats ist an sich bekannt. Es kann hergestellt werden durch Polymerisation der Pfropfmonomeren in Gegenwart eines Kautschuks, d. h. der Pfropfgrundlage $b_1$.

Als Kautschuk kommt z.B. in Betracht: Polybutadien (vgl. DE-A-14 20 775 und DE-A-14 95 089); Copolymerisate aus Butadien und Styrol (vgl. GB-PS 649 166), Polyacrylsäureester (vgl. DE-A-12 60 135); sowie Copolymerisate aus Acrylsäureester und Butadien (vgl. DE-A-12 38 207); ferner Elastomere von Copolymerisaten aus Acrylsäureestern mit Styrol, Acrylnitril und Vinylethern und Copolymerisate aus Ethylen, Propylen und einem nicht konjugierten Dien (EPDM-Kautschuke).

Die Pfropfcopolymerisation kann wie bekannt in Lösung, Suspension oder vorzugsweise in Emulsion erfolgen. Die Weichphase des Pfropfmischpolymerisats weist, bei der bevorzugten Herstellung des Kautschuks und der Pfropfung in Emulsion, einen mittleren Teilchendurchmesser ($d_{50}$-Wert der integralen Masseverteilung) von z. B. 0,08 μm auf. In der Regel liegt nach der Vergrößerung der Teilchen, z.B. durch Agglomeration oder bei der Gewinnung der Emulsion im Wege des Saatlatex-Verfahrens, der $d_{50}$-Wert im

3

EP 0 362 724 A2

Bereich 0,1 bis 1 μm. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenden Doppelbindungen erfolgt. Zumindest ein Teil der Monomeren ist also auf den Kautschuk gepfropft, also durch covalente Bindungen an den Kautschuk-Fadenmolekülen gebunden.

Komponente C

Die Komponente C ist in den erfindungsgemäßen thermoplastischen Formmassen zu 5 bis 50 Gew.%, vorzugsweise zu 5 bis 40 Gew.% enthalten. Die Komponente C ist ein Polymerisat des Methyl-, Ethyl, Propyl- und Butylesters der Methacrylsäure, vorzugsweise des Methyl- und Ethylmethacrylsäureesters. Es besitzt einen linearen oder verzweigten Aufbau, gelhaltige Polymere mit vernetztem Aufbau sind nicht Polymere im Sinne der Erfindung.

Als Komponente C sind sowohl Homopolymerisate als auch Copolymerisate dieser Methacrylsäureester geeignet. Die Copolymerisate bestehen allerdings zu wenigstens 80 % aus Methacrylsäureester. Geeignete Comonomere sind Acrylsäure-$C_1$-$C_8$-alkylester, Methacrylsäurearylester, (Meth)acrylsäure. Ein besonders geeignetes Comonomer, insbesondere in Verbindung mit Methylmethacrylat, ist das N-substituierte (Meth)-acrylamid der allgemeinen Formel I, wie es als Bestandteil der Komponente B auftritt. Es kann in einer größeren Menge, z. B. bis zu 40 Gew.% bezogen, auf °C verwendet werden. Die Viskositätszahl (VZ; 0,5 %ig in $CHCl_3$) liegt zwischen 40 und 90 ml/g.

Die Homopolymeren können nach bekannten Polymerisationsverfahren hergestellt werden, vorzugsweise aber durch radikalische oder thermische Polymerisation. Als Polymerisationsverfahren eignen sich Verfahren in Emulsion, Masse, Suspension, Dispersion, insbesondere die Masse- bzw. die Lösungspolymerisation. Die Molekulargewichte können durch übliche Maßnahmen wie die Verwendung von Mercaptanen als Regler in weiten Bereichen variiert werden.

Geeignete Homopolymerisate sind zum Teil bekannt und z.B. unter den Handelsnamen Degalan® oder Plexiglas® kommerziell erhältlich.

Die Herstellung der Copolymerisate wird in der für Vinylverbindungen üblichen Weise, insbesondere durch radikalische Polymerisation vorgenommen. Die Polymerisation kann beispielsweise in Substanz oder Lösung, in Emulsion oder als Perlpolymerisation stattfinden. Als radikalische Polymerisationsinitiatoren können Azoverbindungen wie AIBN, oder Peroxide wie di-Benzoylperoxid und Redoxsysteme gelten. Als Beispiel für Radikalinitiatoren für die Emulsionspolymerisation sei Kaliumperoxodisulfat genannt. Als Regler können Mercaptane verwendet werden. Der Molekulargewichtsbereich der Copolymerisate kann z.B. 40 000 bis 400 000 (Gewichtsmittel Mw aus Lichtstreuung) betragen.

Komponente D

Die thermoplastische Formmasse kann, bezogen auf 100 Gew.-Teile aus A und B und C zusätzlich z. B. bis zu 40 Gew.-Teile an üblichen Zusatzstoffen enthalten.

Übliche Zusatzstoffe sind z.B. Verstärkungsmittel und Füllstoffe wie Glasfasern, Asbestfasern, Kohlenstoff-Fasern und/oder Gipsfasern, synthetische Calciumsilikate, Kaolin, calcinierter Kaolin, Wollastonit, Talkum, Kreide und deren Kombinationen. Außerdem können Zusatzstoffe zur Erhöhung der Abschirmung von elektromagnetischen Wellen (z.B. Metallpulver, -flocken, -fasern, metallbeschichtete Füllstoffe), Pigmente und Farbstoffe sowie Antistatika, Antioxidantien und Stabilisatoren Verwendung finden. Weitere Zusatzstoffe sind Flammschutzmittel z.B. halogenhaltige Flammschutzmittel, gegebenenfalls in Kombination mit anorganischen Synergisten wie Antimon- oder Borverbindungen, oder halogenfreie Verbindungen wie Cyanursäurederivate, Phosphor und dessen Verbindungen sowie anorganische Substanzen, die bei erhöhter Temperatur nichtbrennbare Gase abspalten (z.B. Carbonate).

Außerdem können Schmiermittel, die für die Weiterverarbeitung der Formmassen z.B. bei der Herstellung von Formkörpern und Formteilen erforderlich sind und Oxidationsverzögerer, sterisch gehinderte Phenole, Hydrochinone, substituierte Vertreter dieser Gruppe und deren Mischungen verwendet werden.

Beispiele für UV-Stabilisatoren sind verschiedene substituierte Resorcine, Salicylate, Benzotriazole und Benzophenone und sterisch gehinderte Amine (HALS), die im allgemeinen in Mengen bis zu 2 Gew.% eingesetzt werden.

Gleit- und Entformungsmittel, die in der Regel bis zu 1 Gew.% dem thermoplastischen Harz zugesetzt werden sind Fettsäuren (z.B. Palmitin- oder Stearinsäure), Fettalkohole, Fettsäurealkylester und -amide

4

sowie Ester des Pentaerythrits mit langkettigen Carbonsäuren und Ethylenoxid-Propylenoxid-Blockcopolymeren wie z.B. Pluriol®-Marken.

Herstellung der Formmassen

Das Mischen der Komponenten A, B, C und ggf. D kann nach allen bekannten Methoden erfolgen. Vorzugsweise geschieht jedoch das Mischen der Komponenten A, B und C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation können aber auch teilweise entwässert oder direkt als Dispersion mit der Komponente C und dann mit dem Polycarbonat A vermischt werden, wobei dann während der Vermischung die vollständige Trocknung des Pfropfmischpolymerisats erfolgt.

Die Herstellung der Formmasse erfolgt z.B dadurch, daß eine Schmelze der harten Polymerisate A und C mit den Pfropfmischpolymerisaten bei Temperaturen über 200°C intensiv vermischt wird. Sie erfolgt um eine besonders homogene Verteilung der Weichphase in der Hartmatrix zu erzielen, bevorzugt dadurch, daß man in der Schmelze der Polycarbonate (Komponente A) z.B. in einem Extruder mit Vakuumentgasung das gefällte Pfropfmischpolymerisat B, das einen Restwassergehalt von 10 bis 40 Gew.% aufweist bei Temperaturen über 180°C einbringt und intensiv vermischt. Man kann die Schmelze der beiden Hartkomponenten A und C auch direkt mit einer Dispersion des Pfropmischpolymerisat die einen Feststoffgehalt von 30 bis 60 Gew.% aufweist, bei Temperaturen über 180°C intensiv vermischen. Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen und Sintern; besonders bevorzugt werden aus den nach dem erfindungsgemäßen Verfahren hergestellten Formmassen Formteile durch Spritzgießen für den Automobilbau hergestellt.

Die nachstehend angegebenen Eigenschafts-Kenngrößen wurden wie folgt bestimmt:

1. Die Kerbschlagzähigkeit $a_K$ in [kJ/m²] wurde nach DIN 53 453 an bei 260°C und 280°C gespritzten Normkleinstäben bei -40°C Prüftemperatur bestimmt. Im Falle der Pfropfkautschuke auf Basis der Arcylatkautschuke betrug die Prüftemperatur 0°C.

2. Der Gelbstich der Produkte wurde nach einer Lagerzeit von 15 Minuten bei 290°C subjektiv visuell an bei 280°C spritzgegossenen Rundscheiben ermittelt.

3. Die Durchstoßarbeit Wg in [Nm] wurde nach DIN 53 443 an 2 mm dicken Rundscheiben bei einer Prüftemperatur von -40°C bestimmt.

4. Der Melt Flow Index (MFI) bei 260°C und 5 Kg wurde nach DIN 53 735 bestimmt; soweit es sich um Handelsprodukte handelt, wurden die Bezugsgrößen (T, p) des Herstellers angegeben.

5. Die Viskositätszahl (VZ), $\eta_{spez}/c$ in [ml/g] wurde bei 25°C in einer 0,5 %igen Lösung je nach dem zu vermessenden Polymeren in $CHCl_3$ oder DMF gemessen, im Falle des Polycarbonats in einer 0,5 %igen Lösung in Methylenchlorid.

Komponente A

Aromatisches Polycarbonat auf Basis Bisphenol A mit einer Viskositätszahl VZ = 61,2 ml/g, im Handel erhältlich unter der Bezeichnung Lexan®.

Pfropfmischpolymerisate B1 bis B8

$b_1$) Herstellung einer grobteiligen Acrylatkautschukdispersion als Pfropfgrundlage

$b_{11}$) 16 kg Butylacrylat und 0,4 kg Tricyclodecenylacrylat werden in 150 Liter Wasser unter Zusatz von einem kg des Natriumsalzes einer $C_{12}$- bis $C_{18}$-Paraffinsulfonsäure, 0,3 kg Kaliumpersulfat, 0,3 kg Natriumhydrogencarbonat und 0,15 kg Natriumpyrophosphat unter Rühren auf 60°C erwärmt. 10 Minuten nach dem Anspringen der Polymerisationsreaktion wurde innerhalb von 3 Stunden eine Mischung aus 82 kg Butylacrylat und 1,6 kg Tricyclodecenylacrylat zugegeben. Nach Beendigung der Monomerzugabe wurde das Reaktionsgemisch noch eine Stunde sich selbst überlassen.

$b_1$) Zu einer Vorlage aus 2,5 kg des nach $b_{11}$ erhaltenen Latex wurden nach Zugabe von 50 Litern Wasser und 0,1 kg Kaliumpersulfat im Verlauf von 3 Stunden einerseits eine Mischung aus 49 kg Butylacrylat und 1 kg Tricyclodecenylacrylat und andererseits eine Lösung von 0,5 kg des Natriumsalzes einer $C_{12}$- bis $C_{18}$-Paraffinsulfonsäure in 25 Litern Wasser bei 60°C zugesetzt. Nach Zulauf ende wurde 2 Stunden nachpolymerisiert. Der erhaltene Latex hatte einen Feststoffgehalt von 40%. Die mittlere Teilchengröße wurde zu 290 nm ermittelt ($d_{50}$-Wert der integralen Masseverteilung, wie sie mit einer Ultrazentrifuge entsprechend der Methode von W. Scholtan und H. Lang, Z. Polymere 250 (1972) Seiten 782-796 bestimmt wurde).

$b_2$) Herstellung einer Polybutadiendispersion als Pfropfgrundlage

In einem für 10 atü ausgelegten V2A-Stahlkessel mit Blattrührer wurden vorgelegt:
150 Liter Wasser
1,2 kg Kaliumoleat
0,3 kg Kaliumpersulfat
0,3 kg Natriumbicarbonat
0,15 kg Natriumpyrophosphat
Der Kessel wurde zweimal mit Stickstoff gespült und die Lösung dann in Stickstoff-Atmosphäre auf 65°C erhitzt. Dann wurden 0,5 kg tert.-Dodecylmercaptan und 16,6 kg Butadien zugeführt. Eine Stunde nach Polymerisationsbeginn wurden weitere 83,3 kg Butadien innerhalb von 5 Stunden zudosiert. 5 Stunden nach Beendigung der Butadien-Zugabe, d.h. nach 11 Stunden, wurden nochmals 0,5 kg tert.-Dodecylmercaptan zugegeben. Nach einer Reaktionszeit von insgesamt 19 Stunden wurde bei einem Umsatz von 39,2%, bezogen auf die Emulsion, erhalten. 255 kg der Polybutadien-Emulsion wurden bei 65°C mit 74 Litern Wasser verdünnt. Zur Agglomeration des Latex wurden 30 kg einer wäßrigen Dispersion eines Ethylacrylat-Copolymeren zudosiert, das 96 Gew.% Ethylacrylat und 4 Gew.% Methacrylamid polymerisiert enthielt. Der Feststoffgehalt dieser Dispersion betrug 10 Gew.%, bezogen auf die Dispersion.

Herstellung des Pfropfmischpolymerisats B1

150 kg des Latex b1 als Pfropfgrundlage wurden mit 40 kg einer Mischung aus Methylmethacrylat und N-Benzylmethacrylamid (Verhältnis 91:9) und 110 Litern Wasser gemischt und unter Rühren nach Zusatz von weiteren 0,03 kg Kaliumpersulfat und 0,05 kg Laurylperoxid 4 Stunden auf 65°C erhitzt. Das bei der Pfropfmischpolymerisation erhaltene Polymerisationsprodukt wurde mittels Calciumchloridlösung bei 95°C aus der Dispersion ausgefällt, abgetrennt, mit Wasser gewaschen und bei 80°C i.V. getrocknet. Der mittlere Teilchendurchmesser betrug 390 nm.

Herstellung des Pfropfmischpolymerisats B2

Als Pfropfgrundlage wurde wieder der Latex $b_1$ verwendet. Es wurde wie bei der Herstellung von B1 verfahren. Als Pfropfmonomere wurden Methylmethacrylat und N-Phenylmethacrylamid verwendet (Verhältnis 80:20). Die Mengenverhältnisse und Aufarbeitung sind wie bei B1 beschrieben. Der mittlere Teilchendurchmesser wurde zu 400 nm bestimmt.

Herstellung des Pfropfmischpolymerisats B3

Die Polybutadiendispersion $b_2$ wurde auf 70°C aufgeheizt und bei dieser Temperatur mit 0,13 kg Kaliumpersulfat (in Form einer 3%igen wäßrigen Lösung), 0,02 kg Dodecylmercaptan und 11 kg eines Gemisches aus Methylmethacrylat und N-Cyclohexylmethacrylamid (Verhältnis 92:8) versetzt. 10 Minuten nach Beginn der Pfropfreaktion wurde innerhalb von 3 Stunden ein Gemisch aus 56 kg Methylmethacrylat und N-Cyclohexylmethacrylamid (Verhältnis 92:8) und 0,1 kg tert.-Dodecylmercaptan zudosiert. Dabei wurde die Reaktionstemperatur bei ca. 75°C gehalten. Nach Beendigung der Monomerenzugabe wird die Reaktion noch 1 Stunde fortgesetzt. Das entstandene Pfropfpolymerisat hat eine mittlere Teilchengröße von 240 nm. Es wird mittels einer $MgSO_4$-Lösung bei 95°C gefällt, abgesaugt und getrocknet.

## Herstellung des Pfropfmischpolymerisats B4

Es wurde wie bei der Herstellung von B3 verfahren, wobei im Unterschied zu B3 ein Gemisch aus Styrol und Acrylnitril im Verhältnis 70:30 auf den Polybutadienlatex gepfropft wurde.

## Herstellung des Pfropfmischpolymerisats B5

Die Herstellung erfolgt analog der Herstellung von B2 mit dem Unterschied, daß als Pfropfmonomere Styrol und Acrylnitril im Verhältnis 70:30 auf Acrylatkautschuk gepfropft wurde.

## Herstellung des Pfropfmischpolymerisats B6

Es wurde analog der Herstellung von B3 verfahren. Als Pfropfmonomeres diente Methylmethacrylat. Die Mengenverhältnisse und Reaktionsführung erfolgte wie bei B3.

## Herstellung des Pfropfmischpolymerisats B7

Es wurde wie bei der Herstellung von B3 verfahren. Es wurde ein Gemisch von Styrol und Methylmethacrylat im Verhältnis 70:30 auf das Polybutadien gepfropft. Mengenverhältnisse und Reaktionsführung wie bei B3.

## Herstellung des Pfropfmischpolymerisats B8

Es wurde gemäß dem Beispiel der DE-OS 3 210 284 verfahren. Es wird ein Pfropfkautschuk aus 60 Gewichtsteilen Kautschuk und 40 Gewichtsteilen Methylmethacrylathülle mit einer mittleren Teilchengröße von 0,6 $\mu$ erhalten.

## Thermoplastische Polymerisate C

## Komponente $C_1$ (Homopolymerisat)

Ein in Masse polymerisiertes Polymethylmethacrylat mit einem Schmelzindex MFI (230° C, 38kg) von ca. 6 g/10 min und einer VZ von 55 ml/g, handelsüblich unter der Bezeichnung Plexiglas® 7N.

## Komponente $C_2$ (Homopolymerisat)

Polymethacrylat mit einem Schmelzindex MFI von 2,5 g/10 min (230/3,8); Plexiglas® 8N.

## Thermoplastische Copolymerisate C3-C5

## Herstellung von C3

In einem 10-I-Gefäß wurden 3 kg VE-Wasser, 60 g $C_{12}$-$C_{18}$-Paraffinsulfonsäure (Emulgator; 40%ig in Wasser) und 8 g Kaliumpersulfat vorgelegt und mit Stickstoff gespült. Es wurde auf 75° C gebracht und ein Gemisch aus 1,62 kg Methylmethacrylat, 180 g N-Benzylmethacrylamid und 7 g t-Dodecylmercaptan über 4 Stunden zudosiert und danach 2 Stunden sich selbst überlassen.
Sodann wird das Copolymerisat durch Gefrierkoagulation und Filtration isoliert und getrocknet. VZ (in DMF) = 48 ml/g.

Herstellung von C4

Reaktionsführung wie bei der Herstellung von C4; durch Veränderung der Monomeren bzw. ihrer Mengenverhältnisse (Methylmethacrylat/N-Phenylmethacrylamid im Verhältnis 78:22) wird ein Copolymerisat mit VZ = 44 ml/g erhalten.

Herstellung von C5

Ein Gemisch aus 92 kg Methylmethacrylat und 8 kg N-Cyclohexylmethacrylamid wird mit 0,7 kg t-Dodecylmercaptan (Regler) und 0,15 kg Dilaurylperoxid (Initiator) versetzt und 15 Stunden bei 50°C, dann 5 Stunden bei 80°C anschließend 2 Stunden bei 110°C polymerisiert. Das resultierende Copolymerisat hat eine VZ von 52,3 ml/g.

In den zum Vergleich hergestellten, nicht erfindungsgemäßen Formmassen wurden folgende Komponenten verwendet:

Komponente E

Styrol-Acrylcopolymerisat, hergestellt durch Lösungspolymerisation mit einem Acrylnitrilgehalt von 28 Gew.% und einer VZ von 75 ml/g.

Komponente F

Ein durch Lösungspolymerisation hergestelltes Copolymerisat aus 82,7 Gew.-Teilen Styrol und 17,3 Gew.-Teilen N-phenylmaleinimid und einer VZ von 79 ml/g.

Komponente G

Ein nach EP-PS 174 503 hergestelltes Terpolymerisat aus 60,9 Gew.-Teilen Styrol, 19,3 Gew.-Teilen Maleinsäureanhydrid und 19,8 Gew.-Teilen Methylmethacrylat.

Die in der nachfolgenden Tabelle angegebenen Mengen der Komponenten wurden jeweils mit 0,2 Gew.% eines sterisch behinderten Phenols und 0,1 Gew.% Trisnonylphenylphosphit auf einem Fluidmischer gemischt und auf einem Doppelschneckenextruder z.B. vom Typ ZSK von Werner & Pfleiderer extrudiert. Aus dem getrockneten Granulat der Proben wurden die Formmassen für die Eigenschaftsprüfungen durch Spritzgießen hergestellt.

Tabelle 1:

| Beispiele und Vergleichsversuche | | | | | |
| --- | --- | --- | --- | --- | --- |
| Zusammensetzung (in Gew.teilen) | Vergilbung bei einer Lagerzeit von 15 min bei 290°C | MFI (260°C/5 kp) | Durchstoßarbeit Wg [Nm] bei -40°C | Kerbschlagzähigkeit $a_k$ [kJ/m²] bei -40°C und einer Spritztemperatur von | |
| | | | | 260°C | MT 280°C |
| **Beispiele** | | | | | |
| 1) 60 A; 20 B1; 20 C1 | kaum wahrnehmbar | 21,2 | 46,3 | 19,1* | 18,4* |
| 2) 60 A; 20 B2; 20 C2 | kaum wahrnehmbar | 14,8 | 50,4 | 17,3* | 17,8* |
| 3) 60 A; 20 B3; 20 C1 | sehr schwach | 19,4 | 42,6 | 18,9 | 16,5 |
| 4) 60 A; 20 B3; 20 C2 | sehr schwach | 13,9 | 44,7 | 16,9 | 17,3 |
| **Vergleichsversuche** | | | | | |
| V1) 60 A; 20 B4; 20 E | sehr schwach | 12,1 | 51,4 | 14,2 | 13,9 |
| V2) 60 A; 20 B5; 20 E | stark | 11,1 | 46,3 | 10,4* | 9,2* |
| V3) 60 A; 20 B6; 20 F | deutlich | 5,8 | 41,9 | 17,3 | 15,6 |
| V4) 60 A; 20 B6; 20 G | deutlich | 4,5 | 36,9 | 21,3 | 16,7 |
| V5) 60 A; 20 B7; 20 G | deutlich | 6,5 | 42,3 | 17,1 | 13,4 |
| V6) 60 A; 40 C3 | sehr schwach | 18,4 | 34,7 | 7 | 1,1 |
| V7) 60 A; 20 B8; 20 C1 | sehr schwach | 18,4 | 26,9 | 15,8* | 16,3* |

*Kerbschlagzähigkeit bei 0°C

Tabelle 2:

| Beispiele und Vergleichsversuche | | | | | |
|---|---|---|---|---|---|
| Zusammensetzung | Vergilbung bei einer Lagerzeit von 15 Min. bei 290°C | MFI (260°C/5 kp) | Durchstoßarbeit Wg (Nm) bei- 40°C | Kerbschlagzähigkeit $a_k$ (kJ/m$^2$) bei -40°C und | |
| | | | | MT = 260°C | MT = 280°C |
| Beispiele | | | | | |
| 1. 60 TI A + 20 TI B1 + 20 TI C3 | kaum wahrnehmbar | 16,9 | 44,7 | 18,4*) | 17,9*) |
| 2. 60 TI A + 20 TI B2 + 20 TI C4 | kaum wahrnehmbar | 14,7 | 47,6 | 19,3*) | 18,1*) |
| 3. 60 TI A + 20 TI B3 + 20 TI C5 | sehr schwach | 17,5 | 44,9 | 14,3 | 15,1 |
| 4. 60 TI A + 20 TI B3 + 20 TI C3 | sehr schwach | 15,7 | 37,8 | 15,8 | 15,1 |
| Vergleichsversuche | | | | | |
| V1. 60 TI A + 20 TI B4 + 20 TI E | sehr stark | 12,1 | 51,4 | 14,2 | 13,9 |
| V2. 60 TI A + 20 TI B5 + 20 TI E | stark | 11,1 | 46,3 | 10,4*) | 9,2*) |
| V3. 60 TI A + 20 TI B6 + 20 TI F | deutlich | 5,8 | 41,9 | 17,3 | 15,6 |
| V5. 60 TI A + 20 TI B6 + 20 TI G | deutlich | 4,5 | 36,9 | 21,3 | 16,7 |
| V6. 60 TI A + 20 TI B7 + 20 TI G | deutlich | 6,5 | 42,3 | 17,1 | 13,4 |
| V7. 60 TI A + 20 TI B8 + 20 TI C1 | sehr schwach | 13,3 | 26,9 | 15,8*) | 16,3*) |
| V8. 60 TI A + 40 TI C3 | sehr schwach | 18,3 | 34,7 | 7 | 1,1 |

*) Kerbschlagzähigkeit bei 0°C

**Ansprüche**

1. Thermoplastische Formmasse, enthaltend, bezogen auf die Komponenten A, B und C,

A: 10 bis 85 Gew.% mindestens eines Polycarbonats A

B: 10 bis 50 Gew.% eines Pfropfmischpolymerisats B aus, jeweils bezogen auf B

$b_1$: 20 bis 80 Gew.% mindestens eines Kautschuks ($b_1$) mit einer Glastemperatur von unter $0°C$ und

$b_2$: 80 bis 20 Gew.% einer darauf gepfropften Hülle ($b_2$) aus, jeweils bezogen auf $b_2$

$b_{21}$: 70 bis 95 Gew.% Methylmethacrylat ($b_{21}$) und

$b_{22}$: 5 bis 25 Gew.% eines N-substituierten (Meth)acrylamids ($b_{22}$) der allgemeinen Formel I

$CH_2 = CR\text{-}CONHX$     (I)

in der R Wasserstoff oder ein Methylrest ist und X ein Cyclohexyl-, Methylcyclohexyl-, Benzyl- oder Phenylrest ist· und

C: 5 bis 50 Gew.% eines thermoplastischen Homo- oder Copolymerisats eines $C_1$-$C_4$-Alkylesters der Methacrylsäure.

2. Thermoplastische Formmasse nach Anspruch 1, enthaltend als thermoplastisches Copolymerisat C ein Copolymerisat aus, jeweils bezogen auf C

$c_1$: 60 bis 95 Gew.% einpolymerisierten Einheiten des Methylmethacrylats,

$c_2$: 40 bis 5 Gew.% einpolymerisierten Einheiten eines N-substituierten (Meth)acrylamids der allgemeinen Formel 1.

3. Thermoplastische Formmasse nach Anspruch 1 oder 2, enthaltend, bezogen auf A, B und C

A: 30 bis 80 Gew.% Polycarbonat A

B: 15 bis 40 Gew.% Pfropfmischpolymerisat B aus, jeweils bezogen auf B,

$b_1$: 30 bis 70 Gew.% Kautschuk $b_1$ mit einer Glastemperatur von unter $-20°C$, $b_2$: 70 bis 30 Gew.% Hülle $b_2$

C: 5 bis 40 Gew.% thermoplastisches Polymerisat $c$.

4. Thermoplastische Formmasse nach Anspruch 1 oder 2, dadurch gekennzeichnet, daß die Komponente A ein Polycarbonat auf Basis Bisphenol A ist.

5. Thermoplastische Formmasse nach Anspruch 1 oder 2, dadurch gekennzeichnet, daß die Komponente $b_{22}$ N-Cyclohexyl(meth)acrylamid ist.

6. Thermoplastische Formmasse nach Anspruch 1 oder 2, dadurch gekennzeichnet, daß die Komponente $b_{22}$ N-Benzyl(meth)acrylamid ist.

7. Thermoplastische Formmasse nach Anspruch 1 oder 2, dadurch gekennzeichnet, daß die Komponente $b_{22}$ N-Phenyl(meth)acrylamid ist.

8. Thermoplastische Formmasse nach Anspruch 1 oder 2, dadurch gekennzeichnet, daß, bezogen auf 100 Gewichtsteile A und B und C zusätzlich 0,1 bis 40 Gewichtsteile übliche Zusatzstoffe (Komponente D) vorhanden sind.

9. Verwendung einer Formmasse nach einem der Ansprüche 1 bis 8 zur Herstellung von Formteilen.

10. Formteile aus einer Formmasse nach einem der Ansprüche 1 bis 9.